# EUROPÄISCHE PATENTSCHRIFT

(11) **EP 0 950 004 B1**
(45) Veröffentlichungstag und Bekanntmachung des Hinweises auf die Patenterteilung: **09.05.2001**
(21) Anmeldenummer: 97953839.4
(22) Anmeldetag: 17.12.1997
(51) Int. Cl.: B60T 8/34

(54) **HYDRAULIKAGGREGAT**
HYDRAULIC UNIT
APPAREIL HYDRAULIQUE

(30) Priorität: 09.01.1997 DE 19700410
(43) Veröffentlichungstag der Anmeldung: 20.10.1999
(73) Patentinhaber: Continental Teves AG & Co. oHG, 60488 Frankfurt (DE)
(72) Erfinder: BAECHLE, Martin, D-61479 Glashütten 1 (DE)
(86) Internationale Anmeldenummer: EP9707078
(87) Internationale Veröffentlichungsnummer: WO9830425

(56) Entgegenhaltungen:
- EP-A- 0 323 889
- EP-A- 0 482 367
- EP-B- 0 543 187
- DE-A- 4 446 525
- US-A- 5 299 858
- US-A- 5 505 529
- PATENT ABSTRACTS OF JAPAN vol. 095, no. 009, 31.Oktober 1995 & JP 07 165046 A (AISIN SEIKI CO LTD), 27.Juni 1995,

## Beschreibung

Die Erfindung betrifft ein Hydraulikaggregat nach dem Oberbegriff des Patentanspruchs 1 sowie Verfahren zur Vorbefüllung des Hydraulikaggregates mit Bremsflüssigkeit gemäß den Oberbegriffen der Ansprüche 2 und 3.

Hydraulikaggregate der vorgenannten Art werden entweder befüllt oder mit Bremsflüssigkeit unbefüllt dem Fahrzeughersteller zur Verfügung gestellt. Da bei Kraftfahrzeugbremsanlagen, die nach dem Rückförderprinzip arbeiten, die Radauslaßventile in sogenannte Sekundärkreise führen, die quasi dem Pumpensaugpfad mit daran angeschlossenem Niederdruckspeicher entsprechen, bedarf es besonderer Entlüftungs- und Befüllmaßnahmen, um auch die im Bereich des Sekundärkreises abgetrennten elektrisch und hydraulisch schaltbaren Ventile betriebssicher vor Lufteinschlüssen zu schützen und mit Bremsflüssigkeit zu befüllen.

Hierbei ist es für den Fahrzeughersteller von Vorteil, daß sich der Befüllvorgang des gesamten Bremssystems ausschließlich auf den Primärkreis, d.h. auf den hydraulischen Abschnitt zwischen Bremsdruckgeber und der in Richtung der Radbremse geöffneten Druckmittelverbindung beschränkt. Deshalb werden häufig vom Bremsanlagenhersteller die in einem Hydraulikaggregat zusammengefaßten wesentlichen Funktionskomponenten vorbefüllt dem Fahrzeughersteller zur Verfügung gestellt.

Aus der EP-A-0 482 367 ist bereits ein Hydraulikaggregat für eine Kraftfahrzeugbremsanlage bekannt geworden, die nach dem Rückförderprinzip arbeitet. Das Hydraulikaggregat ist über eine Verbindungsleitung an einem Pumpenaggregat angeschlossen. Zum Befüllen des Hydraulikaggregats mit Bremsflüssigkeit befindet sich am Hydraulikaggregat eine Befüllbohrung, die stromaufwärts zu einem paar in Richtung des Pumpenaggregats sperrenden Rückschlagventilen in die Verbindungsleitung einmündet. Von der Befüllbohrung kommend gelangt die Bremsflüssigkeit über das eine der beiden Rückschlagventile bis zu einem Abschnitt eines Saugpfades der Rückförderpumpe, der durch ein Rückschlagventil von den Auslaßventilen getrennt ist. Von den Auslaßventilen führen Anschlüsse des Hydraulikaggregats zu mehreren Radbremsen. Der Abschnitt des Saugpfades, der zwischen den Auslaßventilen und dem stromabwärts der Rückförderpumpe gelegenen Rückschlagventil gelegen ist, läßt sich folglich über die Befüllbohrung nicht vorbefüllen.

Aufgabe der Erfindung ist es nunmehr, ein Hydraulikaggregat der angegebenen Art bereits dahingehend vorzubereiten, daß mit möglichst geringem konstruktiven als auch funktionellen Aufwand eine möglichst einfache Vorbefüllung des Hydraulikaggregates geschaffen wird.

Diese Aufgabe wird erfindungsgemäß für ein Hydraulikaggregat der genannten Art durch die Merkmale des Patentanspruchs 1 als auch durch zwei geeignete Verfahren zur Vorbefüllung des Hydraulikaggregates gemäß den Ansprüchen 2 und 3 gelöst. Weitere Merkmale und Vorteile der Erfindung sind den einzelnen Patentansprüchen als auch der Beschreibung eines nachfolgenden Ausführungsbeispiels zu entnehmen.

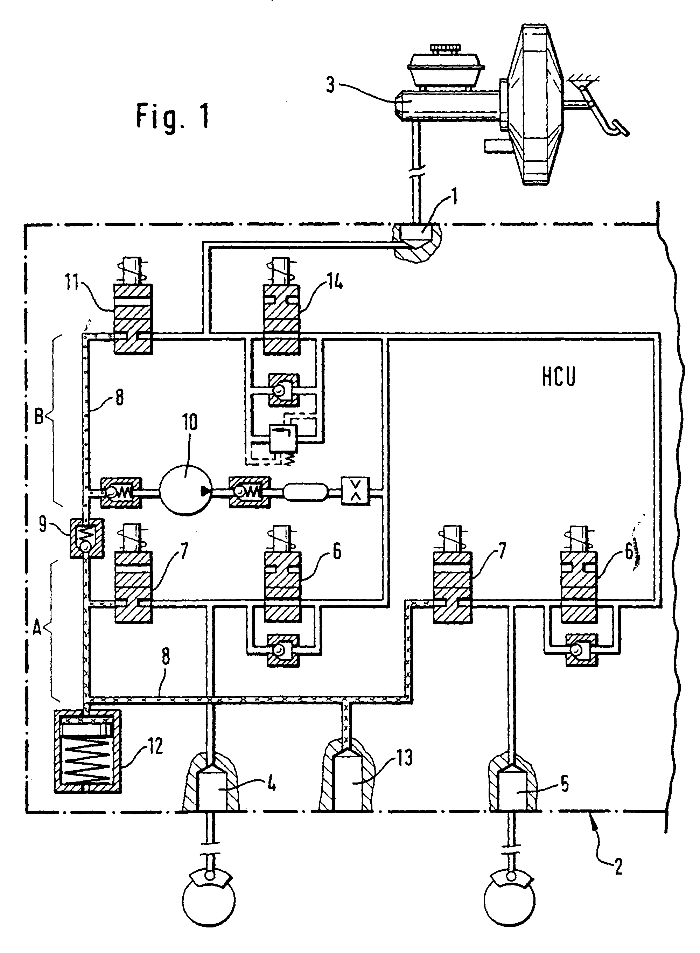

Die Fig. 1 zeigt in prinzipieller Darstellung den schaltungstechnischen Aufbau innerhalb eines Hydraulikaggregates für eine Kraftfahrzeugbremsanlage, die nach dem Rückförderprinzip arbeitet. Gezeigt ist hierbei lediglich ein Bremskreis einer normalweise als Zweikreisbremsanlage ausgeführten Schaltungsanordnung. Ein erster Anschluß 1 am Hydraulikaggregat 2 führt zu einem Bremsdruckgeber 3, wobei der erste Anschluß 1 innerhalb des Hydraulikaggregates 2 über mehrere Druckregelventile eines jeden Bremskreises, die zumindest abschnittsweise im Hydraulikaggregat 2 abgebildet sind, zu weiteren, zweiten und dritten Anschlüssen 4,5 führen, die mit einem Paar Radbremsen in Verbindung stehen. Jeder Radbremse sind innerhalb des Hydraulikaggregates 2 Einlaß- und Auslaßventile 6,7 zugeordnet, wobei stromabwärts zu den Auslaßventilen 7 eines jeden Bremskreises ein Pumpensaugpfad 8 angeschlossen ist, der über ein Druckvorhalteventil 9 einerseits mit einer Pumpe 10, andererseits mittels eines in Grundstellung geschlossenen Umschaltventils 11 vom Bremsdruckgeber 3 getrennt ist. Der Pumpensaugpfad 8 ist somit infolge des Druckvorhalteventils 9 in zwei sog. Toträume A,B unterteilt, wovon der sich zwischen dem Druckvorhalteventil 9 und jeweils zum Auslaßventil 7 erstreckende Totraum A um den Totraum des Niederdruckspeichers 12 vergrößert ist. Die beiden Toträume A,B bilden mit dem Totraum des Niederdruckspeichers 12 den sog. Sekundärkreis der Bremsanlage, der für jeden einzelnen Bremskreis vorhanden ist. Zwecks Aufnahme von Bremsflüssigkeit im Sekundärkreis und damit im Bereich des Pumpensaugpfades 8 sieht die Erfindung vor, daß jeder Bremskreis eine Vorfüllstelle 13 hat, die nach dem Evakuieren des Sekundärkreises eine Vorbefüllung des Sekundärkreises ermöglicht, so daß nach anschließender Komplettierung des Hydraulikaggregates über die drei Anschlüsse 1,4,5 an den Radbremsen und am Bremsdruckgeber 3 ausschließlich die Notwendigkeit zur Befüllung des sog. Primärkreises beim Fahrzeughersteller erforderlich ist, so daß die Auslaßventile 7 nicht mehr während des Füllvorganges geschaltet werden müssen. Denn bei der vorliegenden Ausführung der Druckregelventile, sind die Einlaßventile 6 als auch das als ASR-Trennventil ausgeführte Elektromagnetventil 14 in der Grundstellung stromlos geöffnet. Die abgebildete Ventilschaltung für einen Bremskreis entspricht somit im Hinblick auf die Verwendung des Elektromagnetventils 14 als auch in Verbindung mit der Anordnung des elektrisch betätigbaren Umschaltventils 11 einer Bremsanlage, die nicht nur zur Blockierschutzregelung, sondern auch für einen Betrieb mit Antriebsschlupfregelung als auch Fahrdynamikregelung geeignet ist. Die abbildungsgemäße Bremsanlage entspricht somit in allen wesentlichen Elementen der Bremsanlage nach der gattungsbildenden DE 44 46 525 A1.

Losgelöst von dem nunmehr in seinem Wesen dargestellten Aufbau der Bremsanlage, wird im nachfolgenden auf das erfindungsgemäße Verfahren zur Vorbefüllung des Hydraulikaggregates 2 mit Bremsflüssigkeit eingegangen, wobei nunmehr vorgeschlagen wird, daß vor der Herstellung der hydraulischen Verbindung des Hydraulikaggregates 2 mit den Radbremsen und dem Bremsdruckgeber 3 ausschließlich der Bereich des Pumpensaugpfades 8 und damit der sogenannten Sekundärkreis mit Bremsflüssigkeit befüllt wird. Dies geschieht gemäß den nachfolgenden Verfahrensschritten vorzugsweise indem:
1. Von den drei abbildungsgemäßen Druckmittelanschlüssen 1,4,5 am Hydraulikaggregat zwei Druckmittelanschlüsse druckmitteldicht verschlossen werden.
2. An der Vorfüllstelle 13 wird Vakuum, vorzugsweise Hochvakuum, erzeugt.
3. Das normalerweise den Pumpensaugpfad 8 von dem ersten Druckmittelanschluß 1 trennende, in Grundstellung geschlossene Umschaltventil 11 wird zur Evakuierung des vom Druckvorhalteventil 9 getrennten Abschnitts am Pumpensaugpfad 8 in die Offenstellung geschaltet.
4. An dem nicht verschlossenen einen Druckmittelanschluß wird gleichfalls Vakuum angelegt. Somit werden beide Totraumbereiche A,B entweder über einen der Radanschlüsse 4,5 oder über den Druckmittelanschluß 1 zum Bremsdruckgeber 3 schnell und gründlich evakuiert, da beiderseits des Druckvorhalteventils 9 quasi ein Vakuumanschluß wirksam ist.
5. Das Umschaltventil 11 wird nach Einstellung des gewünschten Vakuums in seine geschlossene Grundstellung zurückgestellt.
6. Das im Bremskreis des Hydraulikaggregates 2 zwischen dem ersten Druckmittelanschluß 1 und den zweiten und dritten Druckmittelanschlüssen 4,5 anstehende Vakuum wird durch Öffnen der drei Druckmittelanschlüsse 1, 4, 5 mit Atmosphäre belüftet.
7. Das an der Vorfüllstelle 13 anstehende Vakuum des Sekundärkreises wird mit dem Druck einer in das Hydraulikaggregat einzuleitenden Bremsflüssigkeit beaufschlagt und befüllt, wobei der Druck der Bremsflüssigkeit derart hoch bemessen wird, daß diese das in Richtung des Umschaltventils 11 öffnende Druckvorhalteventil 9 zu öffnen, jedoch das Umschaltventil 11 nicht zu öffnen vermag.
8. Die vorfüllstelle 13 wird nach Beendigung des Vorfüllvorganges verschlossen. Dem folgt in der Praxis, daß das Vakuum an der Vorfüllstelle 13 durch einen Absolutdruck der Bremsflüssigkeit von etwa 1,5 bar ersetzt wird. Dabei wird zunächst der Totraum A mit Bremsflüssigkeit befüllt, bis der Druck am Druckvorhalteventil 9 den Öffnungsdruck von ca. 0,2 bis 0,9 bar überschreitet, so daß nun auch über das offene Druckvorhalteventil 9 die Bremsflüssigkeit den Totraum B bis zum Erreichen des Fülldruckes von 1,5 bar befüllt. Da der Fülldruck kleiner ist als der hydraulische Öffnungsdruck des Umschaltventils 11, bleibt der zwischen dem Druckvorhalteventil 9 und dem Umschaltventil 11 eingespannte Druck auf dem Wert von ca. 1,5 bar erhalten, während der Totraum A zwischen dem Druckvorhalteventil 9 und den Auslaßventilen 7 nach Entfernen einer Vorfüllvorrichtung und Verschließen der Vorfüllstelle 13 auf Atmosphärendruck mit Bremsflüssigkeit vorbefüllt verharrt.

### Bezugszeichenliste

- 1: Anschluß
- 2: Hydraulikaggregat
- 3: Bremsdruckaeber
- 4: Anschluß
- 5: Anschluß
- 6: Einlaßventil
- 7: Auslaßventil
- 8: Pumpensaugpfad
- 9: Druckvorhalteventil
- 10: Pumpe
- 11: Umschaltventil
- 12: Niederdruckspeicher
- 13: Vorfüllstelle
- 14: Elektromagnetventil

## Patentansprüche

1. Hydraulikaggregat (2) für eine Kraftfahrzeugbremsanlage, die nach dem Rückförderprinzip arbeitet, mit einem ersten Druckmittelanschluß (1) am Hydraulikaggregat (2), der zu einem Bremsdruckgeber (3) führt, mit als Einlaß- und Auslaßventile (6,7) ausgeführte Druckregelventile in einem zumindest teilweise im Hydraulikaggregat (2) vorgesehenen Bremskreises, der über weitere zweite und dritte Druckmittelanschlüsse (4,5) am Hydraulikaggregat (2) mit wenigstens einem Paar Radbremsen verbunden ist, mit einem stromabwärts zu den Auslaßventilen (7) im Hydraulikaggregat (2) angeordneten Niederdruckspeicher (12), mit einem im Hydraulikaggregat (2) den Auslaßventilen (7) nachgeordneten Pumpensaugpfad (8), der mittels eines Druckvorhalteventils (9) einerseits von einer Pumpe (10), andererseits mittels eines in Grundstellung geschlossenen Umschaltventils (11) vom zum Bremsdruckgeber (3) führenden ersten Druckmittelanschluß (1) getrennt ist, wobei der Pumpensaugpfad (8) den Teil des Bremskreises im Hydraulikaggregat (2) umfaßt, der zwischen den Auslaßventilen (7), der Pumpe (10) und dem Umschaltventil (11) gelegen ist, und wobei das Druckvorhalteventil (9) zwischen den Auslaßventilen (7) bzw. dem Niederdruckspeicher (12) und der Verbindung des Umschaltventils (11) zur Saugseite der Pumpe (10) angeordnet ist, dadurch **gekennzeichnet,** daß das Hydraulikaggregat (2) eine Vorfüllstelle (13) aufweist, die zwecks Aufnahme von Bremsflüssigkeit zwischen den Auslaßventilen (7) und dem Druckvorhalteventil (9) in den Pumpensaugpfad (8) einmündet.

2. Verfahren zur Vorbefüllung des Hydraulikaggregates nach Anspruch 1 mit Bremsflüssigkeit, dadurch **gekennzeichnet,** daß vor dem hydraulischen Verbinden des Hydraulikaggregates (2) mit den Radbremsen und dem Bremsdruckgeber (3) der Pumpensaugpfad (8) über die Vorfüllstelle (13) mit Bremsflüssigkeit befüllt wird.

3. Verfahren zur Vorbefüllung des Hydraulikaggregates nach Anspruch 1, **gekennzeichnet** durch nachfolgende Verfahrensschritte:
- Es werden von den drei Druckmittelanschlüssen (1,4,5) am Hydraulikaggregat (2) zwei Druckmittelanschlüsse druckmitteldicht verschlossen.
- An der Vorfüllstelle (13) wird Vakuum erzeugt.
- Das normalerweise den Pumpensaugpfad (8) von dem ersten Druckmittelanschluß (1) trennende, in Grundstellung geschlossene Umschaltventil (11) wird zur Evakuierung des vom Druckvorhalteventil (9) getrennten Abschnitts am Pumpensaugpfad (8) in die Offenstellung geschaltet.
- An dem nicht verschlossenen einen Druckmittelanschluß wird gleichfalls Vakuum angelegt.
- Das Umschaltventil (11) wird nach Einstellung des gewünschten Vakuums in seine geschlossene Grundstellung zurückgestellt.
- Das im Bremskreis des Hydraulikaggregats (2) zwischen dem ersten Druckmittelanschluß (1) und den zweiten und dritten Druckmittelanschlüssen (4,5) anstehende Vakuum wird durch Öffnen der drei Druckmittelanschlüsse (1,4,5) mit Atmosphäre belüftet.
- Das an der Vorfüllstelle (13) anstehende Vakuum wird mit dem Druck einer in das Hydraulikaggregat (2) einzuleitenden Bremsflüssigkeit beaufschlagt und befüllt, wobei der Druck der Bremsflüssigkeit derart hoch bemessen ist, daß dieser das in Richtung des Umschaltventils (11) öffnende Druckvorhalteventil (9) zu öffnen, jedoch das Umschaltventil (11) nicht zu öffnen vermag.
- Die Vorfüllstelle (13) wird nach Beendigung des Vorfüllvorganges verschlossen.

## Claims

1. Hydraulic unit (2) for an automotive vehicle brake system according to the recirculation principle, which includes a first pressure fluid port (1) on the hydraulic unit (2) that leads to a braking pressure generator (3), pressure control valves configured as inlet and outlet valves (6,7) in a brake circuit that is provided at least in part in the hydraulic unit (2), the said circuit, via further second and third pressure fluid ports (4,5) on the hydraulic unit (2) being connected to at least one pair of wheel brakes, including a low-pressure accumulator (12) arranged in the hydraulic unit (2) downstream of the outlet valves (7), and a pump suction conduit (8) that is arranged in the hydraulic unit (2) downstream of the outlet valves (7) and separated from a pump (10) by way of a pressure-retaining valve (9), on the one hand, and from the first pressure fluid port (1) leading to the braking pressure generator (3) by a change-over valve (11) which is closed in the initial position, on the other hand, wherein the pump suction conduit (8) comprises that part of the brake circuit in the hydraulic unit (2) which is disposed between the outlet valves (7), the pump (10) and the change-over valve (11), and wherein the pressure-retaining valve (9) is interposed between the outlet valves (7) or the low-pressure accumulator (12) and the connection between the change-over valve (11) and the suction side of the pump (10),
**characterized** in that the hydraulic unit (2) includes a prefilling location (13) which opens into the pump suction conduit (8) between the outlet valves (7) and the pressure-retaining valve (9) to take up brake fluid.

2. Process of prefilling the hydraulic unit as claimed in claim 1 with brake fluid,
**characterized** in that the pump suction conduit (8) is filled with brake fluid by way of the prefilling location (13) before the hydraulic unit (2) is connected hydraulically to the wheel brakes and the braking pressure generator (3) .

3. Process of prefilling the hydraulic unit as claimed in claim 1,
**characterized** by the following process steps:
- Two pressure fluid ports of the three pressure fluid ports (1,4,5) on the hydraulic unit (2) are closed so as to be pressure-fluid tight.
- Vacuum is generated at a prefilling location (13).
- The change-over valve (11) which is closed in its initial position and normally isolates the pump suction conduit (8) from the first pressure fluid port (1) is switched to assume its open position for bleeding the portion of the pump suction conduit (8) which is isolated from the pressure-retaining valve (9).
- Vacuum is equally applied to the first pressure fluid port which is not closed.
- The change-over valve (11) is reset to its closed initial position after the desired vacuum has been adjusted.
- The vacuum prevailing in the brake circuit of the hydraulic unit (2) between the first pressure fluid port (1) and the second and third pressure fluid ports (4,5) is ventilated with atmosphere by opening of the three pressure fluid ports (1,4,5).
- The vacuum prevailing at the prefilling location (13) is acted upon and filled with the pressure of a brake fluid being introduced into the hydraulic unit (2), and the pressure of the brake fluid is rated so high that it is able to open the pressure-retaining valve (9) which opens in the direction of the change-over valve (11), but unable to open the change-over valve (11).
- The prefilling location (13) is closed after the prefilling operation is completed.

## Revendications

1. Organe hydraulique (2) pour un système de freinage de véhicule automobile qui fonctionne selon le principe du refoulement, comportant un premier branchement (1) de fluide sous pression sur l'organe hydraulique (2), qui mène à un transmetteur (3) de pression de freinage, comportant des soupapes de régulation de pression réalisées sous forme de soupapes d'admission et d'échappement (6, 7) dans un circuit de frein qui est prévu au moins pour partie dans l'organe hydraulique (2) et qui est relié à au moins une paire de freins de roue par l'intermédiaire d'un deuxième (4) et d'un troisième (5) branchement de fluide sous pression sur l'organe hydraulique (2), comportant un accumulateur à basse pression (12), disposé en aval des soupapes d'échappement (7) dans l'organe hydraulique (2), et comportant un chemin d'aspiration de pompe (8), qui est disposé après les soupapes d'échappement (7) dans l'organe hydraulique (2) et qui est isolé, d'une part d'une pompe (10) au moyen d'une soupape (9) de retenue de pression, et d'autre part, au moyen d'une soupape de commutation (11) fermée dans sa position de base, du premier branchement (1) de fluide sous pression menant au transmetteur (3) de pression. de freinage, le chemin d'aspiration de pompe (8) comprenant la partie du circuit de frein dans l'organe hydraulique (2) qui est située entre les soupapes d'échappement (7), la pompe (10) et la soupape de commutation (11), et la soupape (9) de retenue de pression étant disposée entre les soupapes d'échappement (7) ou encore l'accumulateur à basse pression (12) et la liaison de la soupape de commutation (11) au côté d'aspiration de la pompe (10), **caractérisé** en ce que l'organe hydraulique (2) comporte un point de pré-remplissage (13) qui, afin de recevoir du liquide de frein, débouche dans le chemin d'aspiration de pompe (8) entre les soupapes d'échappement (7) et la soupape (9) de retenue de pression.

2. Procédé pour le pré-remplissage en liquide de frein de l'organe hydraulique selon la revendication 1, **caractérisé** en ce que, avant la liaison hydraulique de l'organe hydraulique (2) avec les freins de roue et le transmetteur (3) de pression de freinage, le chemin d'aspiration de pompe (8) est rempli de liquide de frein au moyen du point de pré-remplissage (13).

3. Procédé pour le pré-remplissage de l'organe hydraulique selon la revendication 1, **caractérisé** par les étapes suivantes :
- parmi les trois branchements (1, 4, 5) de fluide sous pression sur l'organe hydraulique (2), deux branchements sont fermés en étanchéité au fluide sous pression.
- Un vide est produit au point de pré-remplissage (13).
- La soupape de commutation (11), qui est fermée en position de base et isole normalement le chemin d'aspiration de pompe (8) du premier branchement (1) de fluide sous pression, est commutée en position ouverte afin de mettre au vide la partie du chemin d'aspiration de pompe (8) qui est séparée par la soupape (9) de retenue de pression.
- On applique également un vide au branchement de fluide sous pression non fermé.
- La soupape de commutation (11) est, une fois le vide souhaité établi, ramenée dans sa position de base fermée.
- Le vide régnant dans le circuit de frein de l'organe hydraulique (2) entre le premier branchement (1) de fluide sous pression et le deuxième (4) et le troisième (5) branchement de fluide sous pression est mis à l'atmosphère en ouvrant les trois branchements (1, 4, 5) de fluide sous pression.
- Le vide régnant au point de pré-remplissage (13) est sollicité par la pression d'un liquide de frein à introduire dans l'organe hydraulique (2), et rempli, la pression du liquide de frein étant prévue d'une valeur lui permettant d'ouvrir la soupape (9) de retenue de pression, laquelle s'ouvre en direction de la soupape de commutation (11), mais non d'ouvrir la soupape de commutation (11).
- Une fois le processus de pré-remplissage achevé, le point de pré-remplissage (13) est fermé.
